# EUROPEAN PATENT APPLICATION

(11) **EP 1 167 851 A2**
(43) Date of publication of application: **02.01.2002**
(21) Application number: 01850100.7
(22) Date of filing: 01.06.2001
(51) Int. Cl.: F16L 9/00

(54) **Duct**

(30) Priority: 05.06.2000 SE 0002086
(71) Applicant: Aspuddens Plat & Smide AB, 145 02 Norsborg (SE)
(72) Inventor: Peteri, Pasi, 147 42 Tumba (SE)
(74) Representative: Rosenquist, Per Olof

(57) **Abstract**

A duct comprising a botten (1), two side walls (2) and a lid (6) which can be mounted and removed, at which the angle (α) between the respective side wall (2) and the bottom (1) is greater than 90°C in the open position of the duct. Each of the side walls (2) is provided with at least one longitudinal, inwardly projecting section (4) and the lid (6) has from the plane of the lid (6) substantially perpendicularly projecting, longitudinal lateral sections (8) provided with at least one inwards directed bead (9) at the inner side of the respective lateral section (8), the lid being attachable to the side walls (2) of the duct by those being forced inside the lateral sections (8) of the lid (6). The beads (9) of the lateral sections (8) co-operate with the inwards directed sections (4) of the side walls, whereby a tight duct is created.

## Description

The present invention relates to a duct which comprises a bottom, two side walls and a lid which can be attached and removed.

In environments with high hygienic stipulations, such as within the pharmaceutical and the foodindustry and in clean rooms it is important to enclose wires, cables, tubes etc. Today this is mostly made with a sort of duct having a bottom and two side walls and a lid which is by means of screws attached to the side walls. These prior art cable ducts require tools and fastening means for closure and their mounting is time-consuming. In addition thereto it is difficult and circumstantial to seal them, e.g. with silicone.

The aim of the present invention is to provide a duct solving the above mentioned problems. This has been achieved by a duct according to the introductory paragraph which is characterized in that the angle between each side wall and bottom is greater than 90°C in the open position of the duct. The side walls are provided with at least one longitudinal, inwards projecting section and the lid comprises longitudinal, lateral sections, protruding substantially at right angles from the plane of the lid. They are provided with at least one inwardly directed bead at the inner side of each lateral section. The lid may be secured to the side walls of the duct by these being forced inside the lateral sections of the lid, the beads of the lateral sections co-operating with the inwardly projecting sections of the side walls, whereby a tight duct is formed.

This solution makes it possible to put the lid in place by a simple snapping action and to keep it under pressure thanks to the outwardly directed spring action of the side walls and cooperation between the inward sections of the side walls and the beads of the lateral sections. An additional advantage of the duct according to the invention is that it is so tight that it can be used e.g. as a ventilation duct.

In a preferred embodiment the duct comprises a longitudinal flat contact surface at the inward sections of the side walls at the lid covering the duct and pressed against an essentially flat, longitudinal contact surface along the end edge of the lid lateral sections. The duct is very tight but can additionally simply be tightened with an aid of a silicone strand along the joint between the lid and the side walls.

If the duct is to be mounted flatly against for instance a wall, it is advantageous to have its bottom bent inwardly as a longitudinal dent which counteracts tendency of the bottom to get curved upon the bending in of the side walls when the duct is closed by the lid.

The duct according to the invention is approximately water tight (water proof with silicone), fire proof, clean and easy to mount.

The invention will now be described more in detail with reference to preferred embodiments and to the drawing.
- Fig. 1: illustrates an end view of a duct according to the invention in open position and with somewhat outwardly angled side walls.
- Fig. 2: illustrates an end view of a lid for the duct according to the invention.
- Fig. 3: illustrates a duct according to the invention in a closed position and seen from one of its ends.
- Fig. 4: illustrates on larger scale the contact of the lid against the side wall of the duct.
- Fig. 5: illustrates a duct having a bent bottom.
- Fig. 6: illustrates a recess for a screwhead in the bent bottom of the duct.
- Fig. 7: illustrates a cross section of a duct having a built-in mounting for a tube and being filled with an insulation material.

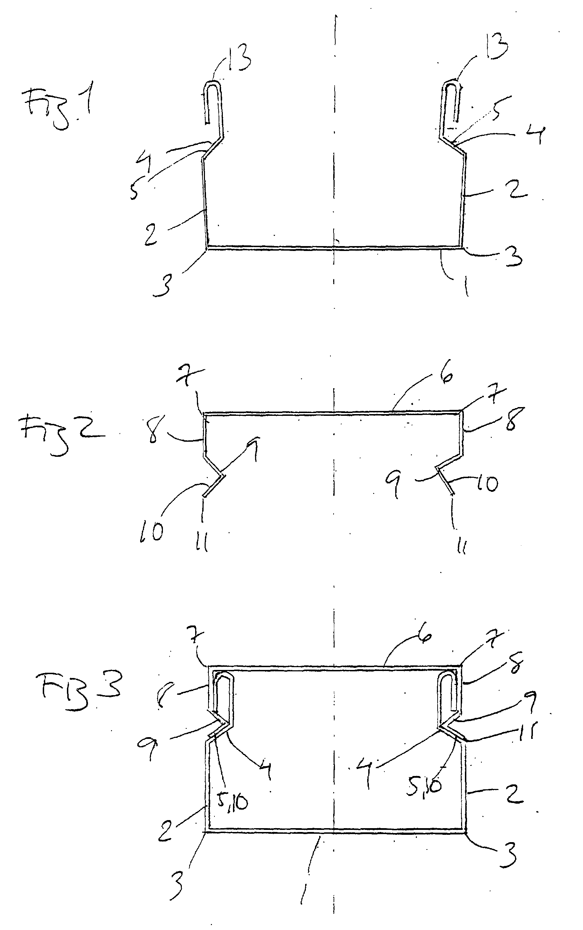

A duct according to a first embodiment comprises a bottom 1 and two side walls 2 along the edges 3 of the bottom, see fig. 1. The side walls 2 form with the bottom 1 an angle α which is greater than 90°C and they are resiliently bendable in towards each other. In the upper portions of the side walls 2 there is a bent in section 4 with a flat contact surface 5 sloping inwards. From there the side walls 2 extend upwards and are then bent outwards and downwards like inverted U:s.

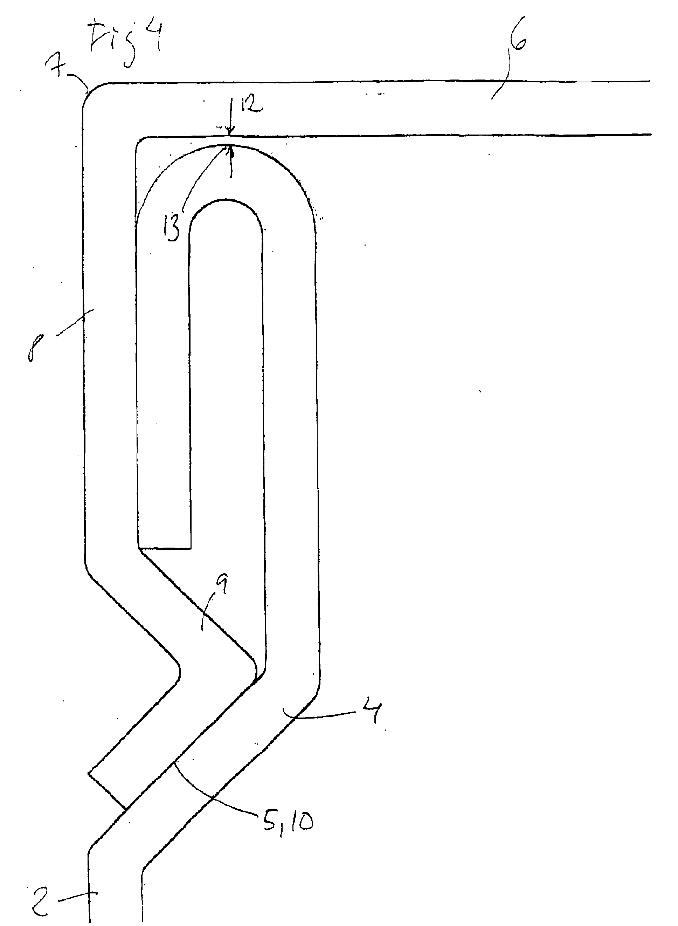

In fig. 2 there is shown a lid 6 for the duct according to the invention. From the edges 7 of the lid 6 side edges project downwards at right angles to the plane of lid 6. At the outer portions of the side edges 8 the side edges are bent firstly inwards and then outwards so that an inwards directed bead 9 is formed. Preferably, the outer most bend has a flat contact surface 10 along the end edges 11 of the side edges 8.

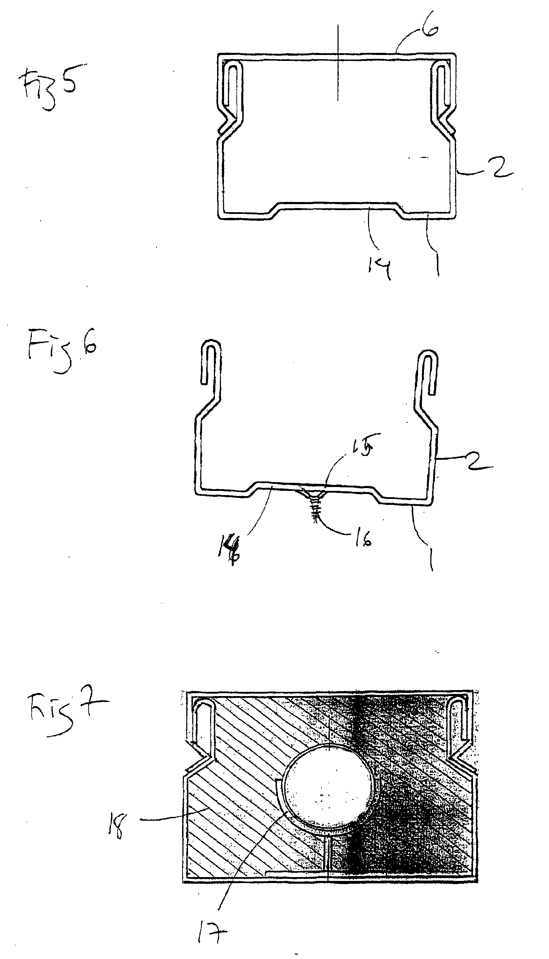

Mounting of the lid 1 on the duct requires that the side walls 2 of the duct are bent in so that the lid 6 can be snapped over the side walls 2 and so that the beads 9 of the lid 6 engage the inwardly projections 4 in the side walls 2. See fig. 3.

Fig. 4 is a magnified view showing a portion of the contact between the lid 6 and a duct side wall 2. The sloping, flat contact surface 5 and U-shaped upper portion press against the contact surface 10 of the lateral edge 8 and the internal side of the orthogonal side edge 8, respectively. Between the lid 6 and the upper edge 13 of the side wall there is a slot 12 securing that the sealing between the lid 6 and the duct will be at the flat contact surface 5 of the side wall 2 and the outer most bend 10 of the side edge 8. If the upper edge 13 of the side wall 2 would touch the inside of lid 6 there would be risk that the outer most bend 10 of the side edge 8 could not reach down to the flat contact surface 5 of side wall 2. The duct can be further sealed off with an aid of a silicone string located along the end edges 11 of the lateral edges 8.

In order to avoid that the bottom 1 gets curved upon inward bending of the lateral walls 2 an inward bend 14 can be present along the bottom 1, see another embodiment of the duct shown in fig. 5. Such an inward bend 14 also serves to counter sink screwheads or other fastening means which are used to mount the duct on e.g. a wall. Fig. 6 shows a hole 15 cut out in the bottom 1 to receive a screw 16. By screwing the inward bend 14 towards the wall or other mounting surface to a desired position it is possible to adjust to a desired value the spring action executed by the side walls 2 against the lid 6.

Fig. 7 shows a third embodiment of the duct having a mounting 17 for a tube attached to the internal side of the bottom 1. Any type of a holder may naturally be arranged inside the duct. The figure does also show that the duct is filled with insulation material 18.

## Claims

1. A duct comprising a bottom (1), two side walls (2), and an attachable/removable lid (6, **characterized in that** the angle (α) between each side wall (2) and the bottom (1) is greater than 90°C in the open position of the duct, that each of the side walls (2) is provided with at least one longitudinal, inwardly projecting section (4) and that the lid (6) includes longitudinal, lateral sections (8) protruding substantially at right angles from the plane of the lid and provided with at least one inwardly directed bead (9) at the inner side of each lateral section (8), the lid (6) being mountable at the side walls (2) of the duct by those being forced into positions inside the lateral sections (8) of the lid (6), the beads (9) of the lateral sections (8) then co-operating with the inwardly directed sections (4) of the side walls, resulting in the creation of a tight duct.

2. A duct as claimed in claim 1, wherein a longitudinal, flat contact surface (5) of the inwards projecting sections (4) of the side walls (2), when the lid (6) is attached over the duct, is biased against a substantially flat, longitudinal contact surface (10) along the end edge (11) of the lateral sections (8) of the lid (6).

3. A duct according to claim 2, wherein the flat contact surfaces (5, 10) of the lateral walls (2) and the side edges (8), respectively, are angled obliquely towards the interior of the duct.

4. A duct according to claim 1, 2 or 3, wherein the bottom (1) has a longitudinal inward bent (14) on its outside.
